(19) Europäisches Patentamt

European Patent Office

Office européen des brevets

(11) **EP 1 170 527 A1**

(12) **DEMANDE DE BREVET EUROPEEN**

(43) Date de publication:
09.01.2002 Bulletin 2002/02

(51) Int Cl.7: **F16H 35/02**

(21) Numéro de dépôt: 01420150.3

(22) Date de dépôt: 06.07.2001

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **07.07.2000 FR 0008882**

(71) Demandeur: **Metravib R.D.S.**
**69760 Limonest (FR)**

(72) Inventeurs:
• **Duperray, Bernard**
**01480 Ars (FR)**
• **Bondoux, Dominique**
**38400 St. Martin d'Heres (FR)**

(74) Mandataire: **Thibault, Jean-Marc**
**Cabinet Beau de Loménie 51, Avenue Jean Jaurès B.P. 7073**
**69301 Lyon Cédex 07 (FR)**

(54) **Dispositif d'entrainement en rotation acyclique d'un système tournant**

(57) Dispositif d'entraînement en rotation acyclique d'au moins un système tournant **(7)**, comprenant des moyens moteurs **(2)**, des moyens d'entraînement **(6)**, des moyens de transmission **(15)** qui comprennent des moyens pour engendrer une variation de la vitesse de rotation instantanée des moyens d'entraînement autour d'une vitesse de rotation moyenne, des moyens pour modifier l'amplitude de la variation de la vitesse instantanée, caractérisé en ce qu'il comprend, en outre, des moyens **(40)** de mesure de la vitesse de rotation instantanée des moyens d'entraînement **(6)**, et des moyens de contrôle **(5)** raccordés aux moyens moteurs **(2)**, aux moyens de mesure **(40)** et aux moyens de modification de l'amplitude de variation pour commander les moyens moteurs et les moyens de modification **(30)**, de manière à établir l'amplitude de variation à une valeur donnée autour d'une vitesse de rotation donnée.

FIG.1

EP 1 170 527 A1

**Description**

La présente invention concerne le domaine technique de la simulation de la rotation d'un moteur à explosion notamment.

L'invention concerne, plus particulièrement, un dispositif d'entraînement en rotation acyclique d'un système tournant, afin de tester sur ce système tournant les effets d'un fonctionnement en rotation acyclique.

En effet, il est connu que les moteurs à explosion présentent, au ralenti plus particulièrement, un fonctionnement acyclique, c'est-à-dire que la vitesse de rotation instantanée du vilebrequin d'un tel moteur connaît des variations autour d'une valeur moyenne de la vitesse de rotation.

Par ailleurs, il a été proposé des dispositifs permettant de générer volontairement une rotation acyclique, pour des applications particulières où une variation cyclique de vitesse angulaire est recherchée.

C'est le cas du dispositif de découpage rotatif décrit dans le brevet américain US 4,338,837, qui est muni d'un couteau rotatif dont la vitesse angulaire doit être harmonisée avec le mouvement linéaire de la pièce à découper. Le couteau rotatif est solidaire de moyens d'entraînement raccordés à l'arbre d'un moteur par l'intermédiaire de moyens de transmission à bielle et permettant d'obtenir une variation de vitesse angulaire. Un tel dispositif est à même d'assurer une réduction de la vitesse de rotation du couteau à l'approche de la pièce à découper.

Il a été proposé d'ajouter à ces dispositifs permettant de générer une rotation acyclique, des moyens permettant de varier l'amplitude des variations cycliques de la vitesse angulaire.

La demande de brevet britannique GB 2 142 412 décrit, quant à elle, un mécanisme de transmission à entraînement rotatif permettant d'obtenir des rapports de vitesse variant cycliquement entre un élément rotatif d'entrée générant un mouvement rotatif et un élément rotatif de sortie associé à un couteau destiné à découper des enveloppes. De surcroît, ce mécanisme de transmission présente la possibilité d'être équipé de moyens permettant de varier l'amplitude des variations cycliques des rapports de vitesse.

L'analyse des dispositifs de l'art antérieur conduit à constater que les moyens mis en oeuvre pour faire varier l'amplitude des variations cycliques ne sont pas adaptés pour assurer avec précision, une régulation efficace de la vitesse de rotation instantanée.

L'objet de l'invention vise donc à remédier aux inconvénients énoncés ci-dessus en proposant un dispositif d'entraînement en rotation acyclique d'au moins un système tournant, conçu pour assurer avec précision, une régulation efficace de la vitesse de rotation instantanée.

Afin d'atteindre cet objectif, l'invention concerne un dispositif d'entraînement en rotation acyclique d'au moins un système tournant, comprenant :

- des moyens moteurs possédant une rotation dépourvue d'acyclisme,
- des moyens d'entraînement, destinés à être solidarisés avec le système tournant,
- des moyens de transmission qui raccordent les moyens moteurs aux moyens d'entraînement et qui comprennent des moyens pour engendrer une variation de la vitesse de rotation instantanée des moyens d'entraînement autour d'une vitesse de rotation moyenne,
- et des moyens pour modifier l'amplitude de la variation de la vitesse instantanée,

    caractérisé en ce qu'il comprend, en outre,

- des moyens de mesure de la vitesse de rotation instantanée des moyens d'entraînement,
- et des moyens de contrôle raccordés aux moyens moteurs, aux moyens de mesure et aux moyens de modification de l'amplitude de variation pour commander les moyens moteurs et les moyens de modification, de manière à établir l'amplitude de variation à une valeur donnée autour d'une vitesse de rotation donnée.

Selon une caractéristique de l'invention, les moyens d'entraînement comprennent :

- au moins trois arbres de transmission disposés en série, dont un premier est lié en rotation aux moyens moteurs et un dernier est lié en rotation aux moyens d'entraînement et qui sont liés entre eux par au moins deux joints de transmission, non homocinétiques, disposés de manière que les éventuelles fluctuations de vitesse de rotation, engendrées par le premier joint de transmission ne soient pas compensées par le deuxième joint de transmission,
- et des moyens pour modifier la position angulaire relative des arbres de transmission.

Selon une autre caractéristique de l'invention, les moyens de transmission comprennent:

- au moins cinq arbres de transmission d'axe de rotation sensiblement coplanaire, dont les premier et dernier arbres sont sensiblement alignés et dont l'arbre central est maintenu par des moyens de guidage mobile en translation selon une direction perpendiculaire à l'axe de rotation de l'arbre central,
- des moyens de commande du déplacement des moyens de guidage pour modifier la position relative des arbres de transmission et agir sur l'amplitude de la variation de vitesse instantanée,
- et des moyens de compensation de la variation de position relative des arbres de transmission.

Le phénomène connu de l'acyclisme est généralement responsable d'une usure accentuée de certaines pièces mécaniques et de bruits, en raison des chocs engendrés par l'acyclisme.

Compte tenu des effets de l'acyclisme sur les différentes pièces mécaniques d'une voiture, tels que certains organes de systèmes de transmission ou de distribution par exemple, il est apparu le besoin de simuler cet acyclisme, afin de pouvoir tester, individuellement, les systèmes tournants susceptibles d'y être soumis.

Un autre objet de l'invention vise donc l'utilisation du dispositif d'entraînement en rotation acyclique décrit précédemment afin de pouvoir tester des systèmes tournants soumis à l'acyclisme engendré par le dispositif d'entraînement conforme à l'invention.

Diverses autres caractéristiques ressortent de la description faite ci-dessous en référence aux dessins annexés qui montrent, à titre d'exemples non limitatifs, des formes de réalisation de l'objet de l'invention.

La **fig. 1** est une vue schématique d'une forme préférée de réalisation d'un dispositif d'entraînement en rotation acyclique selon l'invention.

La **fig. 2** est une vue schématique du montage de deux joints de cardans intégrés aux moyens de transmission du dispositif selon la **fig. 1.**

La **fig. 3** est un graphique illustrant les caractéristiques de l'acyclisme engendré au niveau des arbres de transmission, tels qu'illustrés à la **fig. 2.**

Les **fig. 4** et **5** sont des vues, analogues à la **fig. 1,** montrant différentes variantes de réalisation du dispositif d'entraînement en rotation acyclique conforme à l'invention.

La **fig. 6** est une perspective montrant, schématiquement, une autre forme de réalisation du dispositif d'entraînement selon l'invention.

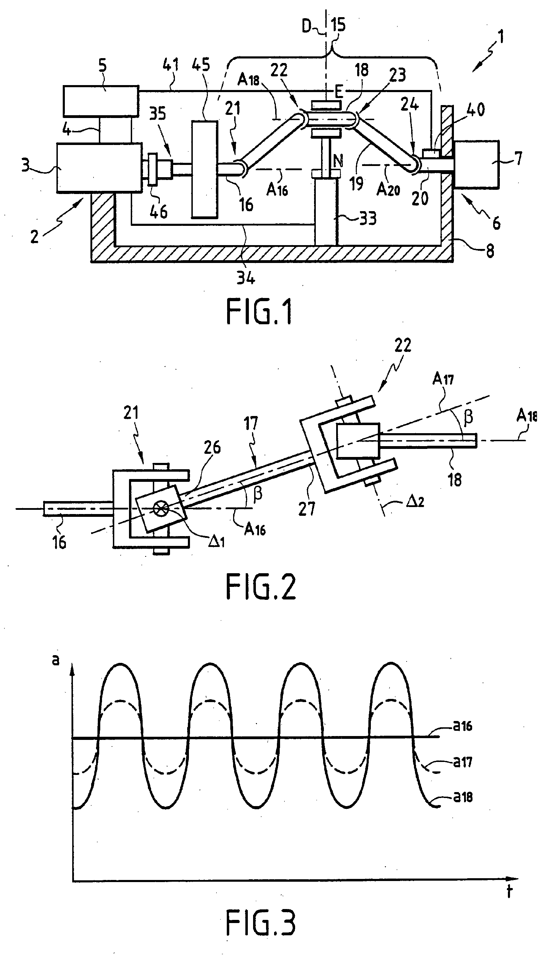

Un dispositif d'entraînement en rotation acyclique conforme à l'invention, tel qu'illustré à la **fig. 1** et désigné dans son ensemble par la référence **1,** comprend des moyens moteurs **2** possédant une rotation dépourvue d'acyclisme. Les moyens moteurs **2** sont, par exemple mais non exclusivement, constitués par un moteur électrique **3,** raccordé, par une ligne **4,** à des moyens de contrôle **5** qui en pilotent le fonctionnement et, plus particulièrement, la vitesse de rotation.

A l'opposé des moyens moteurs **2,** le dispositif d'entraînement **1** comprend des moyens d'entraînement **6** destinés à être solidarisés avec un système **7** à tester. Les moyens d'entraînement **6** sont, par exemple, constitués par une bride tournante portée et guidée par un châssis **8** sur lequel peut être adapté le système tournant **7,** tandis que la bride **6** est raccordée à la partie mobile en rotation de ce système **7.**

Conformément à une caractéristique essentielle de l'invention, le dispositif d'entraînement en rotation acyclique comprend, en outre, des moyens de transmission **15** qui raccordent les moyens moteurs **2** aux moyens d'entraînement **6.** En plus de leur fonction de transmission, de la rotation des moyens moteurs **2** aux moyens d'entraînement **6,** les moyens **15** assurent une fonction de génération d'acyclisme. En effet, les moyens d'entraînement **15** sont conçus pour engendrer une variation de la vitesse de rotation instantanée des moyens d'entraînement **6** autour d'une vitesse de rotation correspondant à la vitesse de rotation des moyens d'entraînement **2.**

Selon une forme préférée de réalisation mais non exclusive, afin de générer cet acyclisme, les moyens d'entraînement **15** comprennent au moins trois arbres de transmission et, selon l'exemple illustré, cinq arbres de transmission **16, 17, 18, 19** et **20** disposés en série, dont un premier **16** est lié en rotation aux moyens moteurs **2** et, plus particulièrement, au moteur **3,** tandis qu'un dernier arbre **20** est lié en rotation au moyen d'entraînement **6.**

Afin de pouvoir transmettre le mouvement de rotation du moteur d'entraînement **3** au moyen d'entraînement **6,** les arbres **16** à **20** sont liés entre eux par quatre joints de transmission non homocinétiques **21, 22, 23, 24,** qui sont disposés de manière que les éventuelles fluctuations de vitesse de rotation, engendrées par le premier joint **21,** ne soient pas compensées par le deuxième joint **22,** tandis que le troisième joint **23** est disposé de manière à ne pas compenser les fluctuations engendrées par le deuxième joint **22,** de même que le quatrième joint **24** est disposé pour ne pas compenser les variations de fluctuation de vitesse engendrées par le troisième joint **23.**

De manière préférée, les quatre joints de transmission **21** à **24** sont disposés pour que leurs fluctuations de vitesses de rotation s'additionnent, de sorte que l'acyclisme, présenté par les moyens d'entraînement **6,** résultent de la somme des acyclismes engendrés par les joints **21** à **24.**

Selon l'exemple illustré, les moyens d'entraînement comprennent quatre joints de transmission **21** à **24,** soit un nombre de joints de transmission inférieur d'une unité au nombre d'arbres de transmission mis en oeuvre par les moyens d'entraînement **15.** Bien entendu, si les moyens de transmission **15** ne comportaient que trois arbres de transmission, ceux-ci ne seraient reliés entre eux que par deux joints de transmission.

De manière préférée, les joints de transmission **21** à **24** mis en oeuvre sont des joints de cardans qui lient, deux à deux, les arbres de transmission. Chaque joint de cardan correspond à une liaison de deux arbres de transmission par une double articulation cylindrique d'axes concourants et perpendiculaires. De manière connue en soi, les joints de cardans sont non homocinétiques.

Afin d'éviter, comme cela était précisé précédemment, que les fluctuations de vitesse de rotation, engendrées par un joint de cardan, ne soient compensées par le joint de cardan suivant, le montage des joints est assuré, comme le montre la **fig. 2,** de manière que, pour deux joints de cardans situés aux extrémités opposées d'un même arbre **17,** l'axe $\Delta_1$ de la liaison cylindrique, entre un premier joint **21** et l'extrémité **26** correspondante de l'arbre **17,** n'est pas coplanaire avec l'axe $\Delta_2$ de la liaison cylindrique entre l'extrémité **27** opposée de l'arbre **17** et le deuxième joint correspondant **22.** De manière préférée, les joints de cardans **21** et **22** sont montés pour que les axes $\Delta_1$ et $\Delta_2$ des liaisons cylindriques soient orthogonaux. Ainsi, l'acyclisme engendré par le joint **21** s'ajoute à l'acyclisme créé par le joint **22.** Il doit être noté que la valeur de l'amplitude a de variation de la vitesse angulaire instantanée $\Omega$ ou valeur d'acyclisme, engendrée par un joint de cardan, est fonction de l'angle relatif $\beta$ des axes de rotation des arbres reliés par ce joint. De plus, l'acyclisme, engendré par un joint de cardan, est d'ordre deux, c'est-à-dire que la vitesse angulaire des arbres reliés par les joints de cardan vérifie la relation :

$$\omega_{17} = \omega_{16} \left[ 1 + a \sin (2\omega_{16}t) \right]$$

où :

- $\omega_{16}$ est la vitesse angulaire de l'arbre **16,**
- $\omega_{17}$ est la vitesse angulaire de l'arbre **17,**
- **a** est l'amplitude de variation de l'acyclisme,
- **t** est le temps.

A titre explicatif, la **fig. 3** illustre la valeur de l'acyclisme $a_{18}$ de l'arbre **18** dans le cadre de la configuration illustrée à la **fig. 2** dans laquelle l'axe de rotation $A_{16}$ de l'arbre **16** est parallèle à l'axe de rotation $A_{18}$ de l'arbre **18,** tandis que l'axe de rotation $A_{17}$ définit, avec les axes $A_{16}$ et $A_{18}$, un angle $\beta$. Sur la **fig. 3**, $a_{16}$ correspond à l'acyclisme de l'arbre **16,** tandis que $a_{17}$ correspond à celui de l'arbre **17.**

Le montage des cardans, décrit pour l'arbre **17,** est, bien entendu, identique pour les arbres **18** et **19** et leurs joints de cardan associés **22, 23** et **23, 24.**

Le dispositif d'entraînement en rotation acyclique **1** comprend, également des moyens **30** pour modifier l'amplitude de la variation de la vitesse instantanée. Selon l'exemple illustré, ces moyens de modification de l'amplitude **30** permettent de modifier la position angulaire relative des arbres de transmission **16** à **20.**

Selon la forme préférée de réalisation du dispositif d'éntraînement illustrée, les moyens de modification d'amplitude de variation **30** comprennent des moyens de guidage **32** de l'arbre de transmission central **18.** Les moyens **32** sont liés à l'arbre **18** par une liaison pivot glissant d'axe confondu avec l'axe $A_{18}$ de l'arbre **18.** Les moyens **32** assurent alors un guidage en rotation, ainsi qu'en translation, de l'arbre **18.** Les moyens de guidage **32** sont, de plus, mobiles en translation selon une direction **D** perpendiculaire ou transversale à l'axe de rotation $A_{18}$ de l'arbre **18.** Les moyens de variation **30** comprennent, en outre, des moyens de commande **33** du déplacement des moyens de guidage **32,** le long de la direction **D.** Les moyens de commande **33** sont, par exemple, constitués par un vérin hydraulique ou électrique raccordé, par une ligne **34** aux moyens de contrôle **5.** Les moyens de commande **33** permettent alors de déplacer l'arbre **18** et ainsi de faire varier la position angulaire de cet arbre **18** avec les arbres **17** et **19** et, par conséquent, de modifier les différents angles relatifs entre les arbres **16** et **17, 17** et **18, 18** et **19** et **19** et **20** et d'agir sur l'amplitude de l'acyclisme des moyens d'entraînement **6.**

Selon une forme de réalisation préférée, le dispositif d'entraînement est conçu de manière que les axes $A_{16}$ et $A_{20}$ des arbres de transmission **16** et **20** sont sensiblement alignés et que l'axe $A_{18}$ de l'arbre **18** reste toujours parallèle aux axes $A_{16}$ et $A_{20}$ des arbres **16** et **20** au cours de son déplacement. Ainsi, les axes de rotation des arbres **16** à **20** sont sensiblement coplanaires. De plus, les moyens **30** sont conçus de manière que l'arbre central **18** est mobile entre une position **N**, illustrée en traits mixtes, dans laquelle les axes de rotation des arbres **16, 17, 18, 19** et **20** sont alignés, et une position extrême E dans laquelle les arbres **16, 17, 18, 19** et **20** ne sont plus alignés. Ainsi, il est possible de varier, par le déplacement des moyens de guidage **32,** de manière continue, la valeur de l'acyclisme des moyens d'entraînement **6** entre une valeur nulle correspondant avec la position **N** et une valeur maximale correspondant à la position **E.**

Il doit être remarqué que la position extrême **E** est choisie de manière à amener la valeur de l'angle $\beta$, entre les axes de rotation de deux arbres de transmission successifs, à une valeur compatible avec un fonctionnement normal et fiable des cardans **21** à **24.** A cet égard, il doit être remarqué que lorsque la valeur de l'angle $\beta$ est trop élevée, l'acyclisme, engendré par le cardan, n'est plus un acyclisme d'ordre 2 pur mais génère des harmoniques d'ordres supérieurs.

Selon l'exemple illustré, le nombre élevé de cardans mis en oeuvre permet, par le cumul de l'acyclisme engendré par chaque cardan, d'atteindre des valeurs élevées d'acyclisme pour une valeur de l'ange $\beta$ faible, de sorte qu'il est possible d'atteindre, avec le dispositif selon l'invention, des vitesses de rotation élevées.

Afin de pouvoir assurer une position fixe aux moyens d'entraînement **6,** le dispositif conforme à l'invention comprend, en outre, des moyens de compensation de la variation de la position relative des arbres de transmission **16** à **20.**

Selon l'exemple illustré, les arbres de transmission **17, 18, 19** et **20** présentent tous une longueur constante, de sorte que, lors du déplacement des moyens de guidage **32,** la position du joint de transmission **21** varie le long de l'axe de rotation $A_{16}$ de l'arbre **16.** Afin de pouvoir compenser ce déplacement, l'arbre **16** est, selon l'exemple illustré, télescopique et comprend une coulisse **35** permettant d'absorber les variations de déplacement du joint **21.** De manière préférée, cette coulisse **35** présente un jeu réduit, autant que faire se peut, afin d'éviter des phénomènes de chocs résultant de l'acyclisme engendré par les moyens de transmission **15.** Il doit être noté que, pour les mêmes raisons, les joints de cardans **21** à **24** présentent, également, des jeux de fonctionnement réduits au maximum.

Conformément à l'invention, le dispositif d'entraînement **1** comprend également des moyens **40** de mesure de la rotation des moyens d'entraînement **6.** Ces moyens de mesure **40** comprennent, de préférence mais non exclusivement, un capteur de rotation optique ou magnétique. En cas d'utilisation d'un capteur optique à roue phonique par exemple, il est choisi, de préférence, un capteur apte à fournir plus de 1 000 tops par rotation des moyens d'entraînement **6.** Ce capteur est alors associé à des moyens de calcul qui permettent de déterminer la vitesse de rotation instantanée et l'acyclisme des moyens d'entraînement **6.**

Les moyens de mesure **40** sont reliés par une ligne **41** aux moyens de contrôle **5,** de sorte que ces derniers peuvent modifier la position des moyens de guidage **2,** afin d'agir sur la valeur de l'acyclisme en fonction d'une valeur prédéterminée ou choisie par un utilisateur du dispositif conforme à l'invention.

De plus, les moyens de contrôle **5** permettent de piloter la vitesse de rotation des moyens moteurs **2,** de sorte qu'un utilisateur peut, par l'intermédiaire des moyens de contrôle **5,** agir, à la fois sur la vitesse de rotation à l'aide des moyens d'entraînement **6** et sur la valeur de l'acyclisme qui est susceptible de varier entre une valeur nulle et une valeur maximum.

De manière générale, afin que l'acyclisme engendré par les moyens de transmission **15** soit absorbé par le système **7** à tester et non par les moyens moteurs **2,** il est souhaitable que ces dits moyens moteurs **2** présentent une inertie de rotation supérieure à celle du système tournant **7.** De manière préférée mais non strictement nécessaire, afin d'atteindre cet objectif, les moyens moteurs **2** sont associés à un volant d'inertie **45.**

Dans certaines phases d'utilisation, l'acyclisme engendré par les moyens de transmission peuvent faire apparaître, compte tenu des variations du couple de transmission, des phénomènes de résonance liée à la raideur en torsion des arbres du dispositif selon l'invention. Afin d'absorber ou d'atténuer ces phénomènes de résonance, il peut être souhaitable de mettre en oeuvre des moyens d'accouplement élastique **46** interposés entre les moyens moteurs **2** et les moyens d'entraînement **6.** De tels moyens d'accouplement élastique peuvent, par exemple, comprendre un manchon élastique **46** interposé entre, de préférence, les moyens moteurs **2** et le volant d'inertie **45.**

Selon l'exemple illustré et décrit précédemment, les moyens de compensation **35** sont constitués par une coulisse, mais ces moyens de compensation **35** pourraient être réalisés sous une autre forme appropriée.

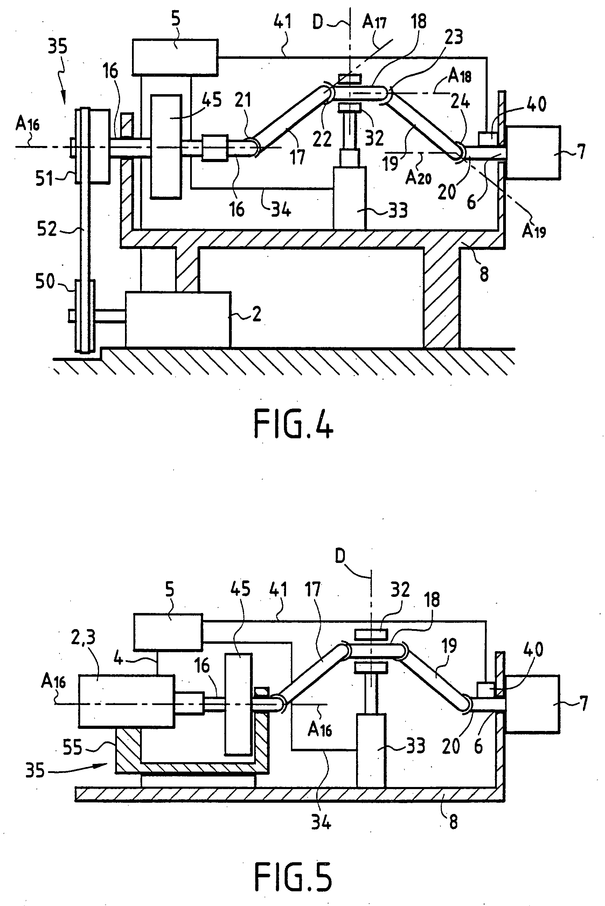

Ainsi, selon une autre forme de réalisation, plus particulièrement illustrée à la **fig. 4,** les moyens **35** de compensation de la variation de position relative des arbres de transmission **16** à **20** comprennent une poulie primaire **50,** solidaire des moyens moteurs **2,** et une poulie secondaire **51,** solidaire du premier arbre de transmission **16.** Le mouvement de la poulie primaire **50** est transmis à la poulie secondaire **51** par une courroie d'entraînement **52** adaptée sur lesdites poulies. Afin de permettre un déplacement en translation de l'arbre **16,** l'une des deux poulies **50, 51,** et selon l'exemple illustré la poulie secondaire **51,** présente une gorge de largeur supérieure, voire très supérieure, à la largeur de la courroie **52.**

Selon une autre forme de réalisation, illustrée à la **fig. 5,** les moyens de compensation **35** comprennent un chariot **55** qui porte les moyens moteurs **2** et qui est mobile en translation selon une direction parallèle à l'axe de rotation $\Delta_{16}$ du premier arbre de transmission **16.**

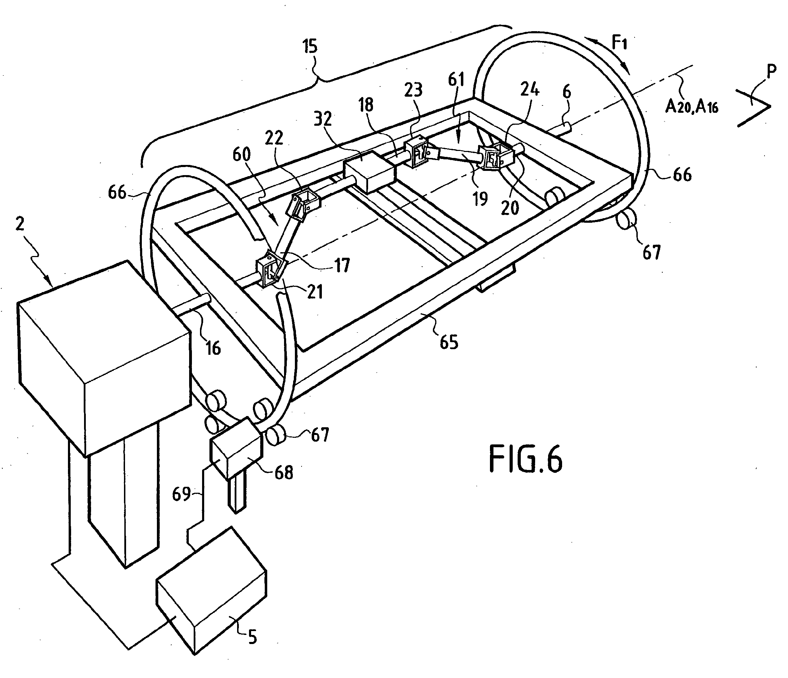

Selon encore une autre forme de réalisation présentée à la **fig. 6,** les moyens de compensation comprennent deux coulisses **60** et **61,** respectivement adaptées sur les arbres de transmission **17** et **19.** La longueur des arbres **17** et **19** peut alors varier en fonction de la position de l'arbre **18** et ainsi en compenser les déplacements, de sorte que les joints de transmission possèdent une position fixe.

Par ailleurs, selon l'exemple illustré à la **fig. 6,** les axes **16** à **20** et les moyens de guidage **32,** constitutifs des moyens de transmission **15,** sont supportés par un cadre **65** porté par deux arceaux **66** montés sur des rouleaux **67** et entraînés par des moyens de positionnement **68** raccordés par une ligne **69** aux moyens de contrôle **5** pour former des moyens de modification de la phase de l'acyclisme engendrée par les moyens de transmission **15.**

En effet, la rotation des arceaux **66,** commandée par les moyens **68** dans l'un ou l'autre des sens de la double flèche $F_1$, permet de faire pivoter le plan **P** contenant les axes de rotation $A_{16}$, $A_{17}$, $A_{18}$, $A_{19}$, $A_{20}$ autour de l'axe commun $A_16$, $A_{20}$ de rotation des arbres. Ainsi, le plan **P** peut passer d'une position sensiblement horizontale, telle qu'illustrée, à une position, par exemple verticale, non représentée.

L'invention n'est pas limitée aux exemples décrits et représentés, car diverses modifications peuvent y être apportées sans sortir de son cadre.

## Revendications

1. Dispositif d'entraînement en rotation acyclique d'au moins un système tournant (7), comprenant

    • des moyens moteurs **(2)** possédant une rotation dépourvue d'acyclisme,
    • des moyens d'entraînement **(6),** destinés à être solidarisés avec le système tournant **(7),**
    • des moyens de transmission **(15)** qui raccordent les moyens moteurs **(2)** aux moyens d'entraînement **(6)** et qui comprennent des moyens pour engendrer une variation de la vitesse de rotation instantanée des moyens d'entraînement autour d'une vitesse de rotation moyenne,

- et des moyens **(30)** pour modifier l'amplitude de la variation de la vitesse instantanée,

**caractérisé en ce qu'**il comprend, en outre,

- des moyens **(40)** de mesure de la vitesse de rotation instantanée des moyens d'entraînement **(6)**,
- et des moyens de contrôle **(5)** raccordés aux moyens moteurs **(2)**, aux moyens de mesure **(40)** et aux moyens de modification de l'amplitude de variation pour commander les moyens moteurs et les moyens de modification **(30)**, de manière à établir l'amplitude de variation à une valeur donnée autour d'une vitesse de rotation donnée.

2. Dispositif d'entraînement en rotation acyclique selon la revendication 1, **caractérisé en ce que** les moyens d'entraînement **(15)** comprennent au moins trois arbres de transmission **(16, 17, 18)** disposés en série, dont un premier est lié en rotation aux moyens moteurs **(2)** et un dernier est lié en rotation aux moyens d'entraînement **(6)** et qui sont liés entre eux par au moins deux joints de transmission **(21, 22)**, non homocinétiques, disposés de manière que les éventuelles fluctuations de vitesse de rotation, engendrées par le premier joint de transmission **(21)** ne soient pas compensées par le deuxième joint de transmission **(22)** et des moyens **(30)** pour modifier la position angulaire relative des arbres de transmission.

3. Dispositif d'entraînement en rotation acyclique selon la revendication 1, **caractérisé en ce que** les moyens de transmission comprennent :

- au moins cinq arbres de transmission **(16** à **20)** d'axe de rotation ($A_{16}$ à $A_{20}$) sensiblement coplanaire, dont les premier **(16)** et dernier **(20)** arbres sont sensiblement alignés et dont l'arbre central **(18)** est maintenu par des moyens de guidage **(32)** mobile en translation selon une direction perpendiculaire **(D)** à l'axe de rotation ($A_{18}$) de l'arbre central **(18)**,
- des moyens de commande **(33)** du déplacement des moyens de guidage **(32)** pour modifier la position relative des arbres de transmission et agir sur l'amplitude de la variation de vitesse instantanée des moyens d'entraînement,
- et des moyens **(35)** de compensation de la variation de position relative des arbres de transmission.

4. Dispositif d'entraînement en rotation selon la revendication 2 ou 3, **caractérisé en ce que** les joints de transmission **(21** à **24)** sont constitués par des joints de cardan.

5. Dispositif d'entraînement en rotation selon la revendication 4, **caractérisé en ce que** les deux joints de cardan **(21, 22)**, situés aux extrémités opposées d'un même arbre **(17)**, sont montés de manière que l'axe ($\Delta_1$) de la liaison cylindrique entre un premier joint **(21)** et une extrémité **(27)** correspondante de l'arbre **(17)**, n'est pas coplanaire avec l'axe ($\Delta_2$) de la liaison cylindrique entre l'extrémité opposée **(27)** de l'arbre **(17)** et le deuxième joint correspondant **(22)**.

6. Dispositif d'entraînement en rotation selon la revendication 3, **caractérisé en ce que** les moyens **(35)** de compensation de la variation de la position relative des arbres de transmission **(16** à **20)** comprennent un chariot qui porte les moyens moteurs **(2)** et qui est mobile en translation selon une direction parallèle à l'axe de rotation ($A_{16}$) du premier arbre de transmission **(16)**.

7. Dispositif d'entraînement en rotation selon la revendication 3, **caractérisé en ce que** les moyens de compensation de la variation de la position relative des arbres de transmission comprennent :

- une poulie primaire **(50)** solidaire des moyens moteurs **(2)** et une poulie secondaire **(51)** solidaire du premier arbre de transmission **(16)**,
- une courroie d'entraînement **(52)** adaptée sur les deux poulies **(50, 51)**, l'une des poulies présentant une gorge de réception de la courroie de largeur supérieure à celle de la courroie.

8. Dispositif d'entraînement selon l'une des revendications 1 à 7, **caractérisé en ce que** les moyens moteurs **(2)** présentent une inertie de rotation supérieure à celle du système tournant **(7)**.

9. Dispositif d'entraînement selon l'une des revendications 1 à 8, **caractérisé en ce que** les moyens moteurs **(2)** sont associés à un volant d'inertie **(45)**.

10. Dispositif d'entraînement selon l'une des revendications 1 à 9, **caractérisé en ce qu'**il comprend des moyens d'accouplement élastique **46** interposés entre les moyens moteurs **2** et les moyens d'entraînement.

11. Dispositif d'entraînement selon l'une des revendications 1 à 10, **caractérisé en ce qu'**il comprend des moyens **(65, 66, 67, 68)** pour faire varier la phase de l'acyclisme.

**12.** Dispositif d'entraînement selon l'une des revendications 1 à 11, **caractérisé en ce que** les moyens **(40)** de mesure de la vitesse instantanée de la rotation des moyens d'entraînement **(6)** comprennent un capteur de rotation optique.

**13.** Utilisation d'un dispositif selon l'une quelconque des revendications 1 à 12, pour entraîner en rotation acyclique au moins un système tournant **(7)** à tester.

FIG.1

FIG.2

FIG.3

FIG.4

FIG.5

FIG.6

**Office européen des brevets**

## RAPPORT DE RECHERCHE EUROPEENNE

Numéro de la demande

EP 01 42 0150

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| A | GB 2 142 412 A (WINKLER DUENNEBIER KG MASCH) 16 janvier 1985 (1985-01-16) * page 3, ligne 47 - page 4, ligne 7; figure 2 * | 1-5 | F16H35/02 |
| A | US 4 338 837 A (HORI SHINICHI) 13 juillet 1982 (1982-07-13) * colonne 6, ligne 1 - colonne 7, ligne 10 * | 1,12 | |
| A | DE 417 721 C (SCHAURTE) 17 août 1925 (1925-08-17) * page 1, ligne 22 - page 2, ligne 95 * | 1 | |
| A | PATENT ABSTRACTS OF JAPAN vol. 013, no. 170 (M-817), 21 avril 1989 (1989-04-21) -& JP 01 003365 A (SAN TOOL:KK), 9 janvier 1989 (1989-01-09) * abrégé * | 1,11 | |
| A | FR 762 217 A (PLATZER) 6 avril 1934 (1934-04-06) * page 1, ligne 44 - page 2, ligne 32 * | 1 | DOMAINES TECHNIQUES RECHERCHES (Int.Cl.7) F16H B31B |

Le présent rapport a été établi pour toutes les revendications

| Lieu de la recherche | Date d'achèvement de la recherche | Examinateur |
|---|---|---|
| BERLIN | 23 octobre 2001 | Hunt, A |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 01 42 0150

La présente annexe indique les membres de la famille de brevets relatifs aux documents brevets cités dans le rapport de recherche européenne visé ci–dessus.
Lesdits members sont contenus au fichier informatique de l'Officeeuropéen des brevets à la date du
Les renseignements fournis sont donnés à titre indicatif et n'engagent pas la responsabilité de l'Office européen des brevets.

23-10-2001

| Document brevet cité au rapport de recherche | | Date de publication | Membre(s) de la famille de brevet(s) | | Date de publication |
|---|---|---|---|---|---|
| GB 2142412 | A | 16-01-1985 | DE | 3323512 A1 | 10-01-1985 |
| | | | US | 4583412 A | 22-04-1986 |
| US 4338837 | A | 13-07-1982 | JP | 55157420 A | 08-12-1980 |
| | | | DE | 3001596 A1 | 04-12-1980 |
| DE 417721 | C | | AUCUN | | |
| JP 01003365 | A | 09-01-1989 | AUCUN | | |
| FR 762217 | A | 06-04-1934 | AUCUN | | |

EPO FORM P0460